(19) Europäisches Patentamt / European Patent Office / Office européen des brevets

(11) **EP 3 803 305 B1**

(12) **EUROPÄISCHE PATENTSCHRIFT**

(45) Veröffentlichungstag und Bekanntmachung des Hinweises auf die Patenterteilung:
**08.04.2026   Patentblatt 2026/15**

(21) Anmeldenummer: **19745040.6**

(22) Anmeldetag: **06.06.2019**

(51) Internationale Patentklassifikation (IPC):
**G01L 5/102** (2020.01)      **G01L 5/101** (2020.01)
**G01M 5/00** (2006.01)       **G01V 3/02** (2006.01)
**G01B 7/16** (2006.01)

(52) Gemeinsame Patentklassifikation (CPC):
**G01L 5/102; G01L 5/101; G01M 5/0041;
G01V 3/02;** G01B 7/16

(86) Internationale Anmeldenummer:
**PCT/DE2019/100515**

(87) Internationale Veröffentlichungsnummer:
**WO 2019/233531 (12.12.2019 Gazette 2019/50)**

(54) **VERFAHREN ZUR LASTÜBERWACHUNG UND ZUR BESTIMMUNG DER LEBENSDAUER VON GEOKUNSTSTOFFBEWEHRTEN ERDKÖRPERN**

METHOD FOR LOAD MONITORING AND FOR DETERMINING THE OPERATIONAL LIFE OF BODIES OF GROUND REINFORCED WITH GEOSYNTHETIC MATERIALS

PROCÉDÉ POUR LA SURVEILLANCE DE LA CHARGE ET POUR LA DÉTERMINATION DE LA DURÉE DE VIE DE MASSES DE TERRE ARMÉES PAR GÉOTEXTILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **06.06.2018   DE 102018113429**

(43) Veröffentlichungstag der Anmeldung:
**14.04.2021   Patentblatt 2021/15**

(73) Patentinhaber: **Huesker Synthetic GmbH
48712 Gescher (DE)**

(72) Erfinder:
• **GRANDIN, Friedrich-Hans
40883 Ratingen (DE)**
• **KOROLIUK, Stepan
48268 Greven (DE)**

(74) Vertreter: **Tarvenkorn, Oliver
Boehmert & Boehmert
Jägerhofstraße 21
40479 Düsseldorf (DE)**

(56) Entgegenhaltungen:
CN-U- 203 320 507          DE-A1- 2 950 337
DE-U1- 202004 020 950      US-A- 4 429 580
US-A1- 2016 341 614

• H. ZANZINGER ET AL: "Performance of a geogrid reinforced railway embankment on piles", 7TH INTERNATIONAL CONFERENCE ON GEOSYNTHETICS, September 2002 (2002-09-01), Nice, France, pages 381 - 386, XP055623152, ISBN: 978-90-58-09523-7, Retrieved from the Internet <URL:https://www.researchgate.net/profile/Helmut_Zanzinger/publication/305723319_Performance_of_a_geogrid_reinforced_railway_embankment_on_piles/links/579c784f08ae5d5e1e14b819/Performance-of-a-geogrid-reinforced-railway-embankment-on-piles.pdf> [retrieved on 20190917]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Lastüberwachung und zur Bestimmung der Lebensdauer von geokunststoffbewehrten Erdkörpern mit den Merkmalen des Oberbegriffs des Anspruchs 1.

Geokunststoffbewehrungen wie insbesondere Geogitter dienen unter anderem dazu, dass Spannungs-Verformungsverhalten eines mit einer Bewehrung versehenen Bodenverbundkörpers so erheblich zu verbessern, dass dieser folglich in der Lage ist, im Vergleich zu einem unbewehrten Erdkörper deutlich erhöhte äußere Beanspruchungen und innere Kräfte schadensfrei und verformungsarm abzutragen.

Geokunststoffbewehrungen übernehmen damit bei vielen Anwendungen eine Funktion zur Einhaltung der Standsicherheit und Gebrauchstauglichkeit im Gesamttragwerk. Ein Versagen der Bewehrung kann somit zum unmittelbaren Versagen der gesamten Konstruktion führen. Beispiele für solche Anwendungen sind Erdfallüberbrückungen, Dammgründungen auf vertikalen Traggliedern oder Bewehrungslagen in Oberflächenabdichtungssystemen. Geokunststoffbewehrungen bieten neben den vergleichsweisen geringen Kosten viele Vorteile in der Baupraxis. Ferner ermöglicht ihr Einsatz eine deutliche Reduzierung des sog. $CO_2$-Footprints und eine Schonung mineralischer Ressourcen wie Schotter, Kies oder Sand.

Eine erfolgreiche Verwendung setzt jedoch voraus, dass man das zeitabhängige Werkstoffverhalten angemessen berücksichtigt. Die Festigkeitseigenschaften von Geokunststoffbewehrungen werden im Wesentlichen von folgenden Parametern beeinflusst:

- chemische und physikalischen Umgebungsbedingungen
- Umgebungstemperatur
- Belastungsdauer
- Belastungsgrad

Eine gegenseitige Beeinflussung dieser Parameter ist dabei nicht grundsätzlich ausgeschlossen.

Insbesondere das zeit- und lastabhängige Zugkraft- und Dehnungsverhalten - Relaxation und Kriechen - ist daher ein wesentlicher Bemessungsparameter. Eine wichtige Eigenschaft ist hierbei die Nichtlinearität dieser Vorgänge, das heißt, durch eine Reduzierung des Belastungsgrades wird beispielsweise die Zeitspanne bis zum Eintreten eines Kriechbruches nicht nur verdoppelt, sondern um ein Vielfaches verlängert und umgekehrt. Die Kenntnis des Belastungsgrades hat somit fundamentalen Einfluss auf die zu erwartende Lebensdauer einer Geokunststoffbewehrung.

Bei der Bemessung von geokunststoffbewehrten Erdkörpern wird diesem spezifischen Materialverhalten Rechnung getragen, indem Bruch- und Gebrauchstauglichkeitszustände separat untersucht werden. Bei der Bemessung des Bruchzustandes werden Teilsicherheitsbeiwerte in Ansatz gebracht, die die Einwirkungen rechnerisch erhöhen und die Widerstände rechnerisch reduzieren. In der Kombination von beiden ergibt sich das gewünschte Sicherheitsniveau. Beim Nachweis der Gebrauchstauglichkeit wird mit charakteristischen Eigenschaften gerechnet, um das reale Verformungsverhalten möglichst realistisch abzubilden und die tatsächlichen Verformungszustände zu beurteilen.

Die Beurteilung des Belastungsgrades ist somit wesentlich, um eine Aussage zur Lebensdauer eines Bauwerkes vornehmen zu können, die wiederum einen erheblichen Einfluss auf Sicherheit im öffentlichen Raum und daraus abgeleitete volkswirtschaftliche Entscheidungen hat.

Im eingebauten Zustand ist es bei Geogittern bisher nur möglich, Verformungen zu registrieren und daraus eine Beurteilung des Belastungsgrades vorzunehmen. Dazu wird der Verformungszustand über die Zeit gemessen und eine Korrelation des Verformungszustandes mit Zugkraft-Dehnungskurven vorgenommen, welche unter Laborbedingungen generiert und somit jedoch nur selektiv äußere Einflüsse berücksichtigt werden können. So werden Luftfeuchtigkeit und Temperatur bei Labormessungen dem Normklima entsprechend (konstant) geregelt, entsprechen damit aber in der Regel nicht realen Ganglinien dieser Parameter. Die Genauigkeit der Verformungsmessung hängt weiterhin vom gewählten Messsystem ab und weist dementsprechend Messfehler auf. Gleiches gilt für die Bestimmung der Eigenschaften im Labor. Eine Ableitung des Belastungsgrades anhand von Verformungsmessungen unter realen Bedingungen und Labormessungen ist somit mit erheblichen Unsicherheiten verbunden.

Um den tatsächlichen Belastungszustand der Geokunststoffbewehrungen im Bauwerk erfassen zu können, muss eine Verformungsmessung außerdem von Anbeginn der Belastung durchgeführt werden, also zum Beispiel direkt nach dem Einbau und vor der Überdeckung, denn eine nachträgliche Durchführung von Dehnungsmessungen lässt nur noch Aussagen zu differentiellen Änderungen des Belastungszustandes während des Beobachtungszeitraums zu.

Die Bestimmung des Belastungsgrades aus Verformungsmessung ist also nicht immer eindeutig: Im Laufe der Lebensdauer können sich Einwirkungen in der Bewehrung z. B. durch Umlagerungsprozesse oder geänderte Einwirkungen verändern. Ob eine gemessene Verformung somit eine Kriechverformung durch konstante Belastung oder eine ggfs. nur zeitweise Erhöhung des Belastungsgrades verursacht ist, kann nicht aufgelöst werden. Die Zuordnung einer gemessenen Verformung zu einem Belastungsgrad ist also nur möglich, wenn die weiteren Einflussparameter bekannt sind und angenommen wird, dass die Einwirkung konstant ist.

Für die Messung einer Verformung im Feld verwendet man häufig elektrische Sensoren, z.B. induktive Wegaufnehmer, welche punktuell für den jeweiligen Sensorstandort Informationen über den Verformungszustand des Geogitters liefern.

Alternativ ist die Verformung beispielsweise dadurch messbar, dass eine polymeroptische Faser in die Gitterstruktur mit eingebracht ist. Dies ist zum Beispiel in CN 203320507 U beschrieben. Darüber können Verformungen festgestellt und gegebenenfalls auch lokalisiert werden. Eine Kraftmessung ist damit jedoch nicht möglich.

Alternativ zu polymeroptischen Fasern kann für die verteilte Messung von Verformungen auch eine geeignete optische Glasfaser verwendet werden. Glasfasern erlauben eine höhere Genauigkeit der Messungen jedoch ist deren Anwendungsbereich mit ca. 1 % auf kleine Dehnungen begrenzt.

Die WO 2010/085243 A1 gibt ein Messverfahren für geosynthetische Strukturen an, das darauf beruht, dass das zur Herstellung der Struktur verwandte Polymer mit elektrisch leitfähigen Füllstoffen versehen wird. Das macht die Struktur aber teuer und verändert die mechanischen Eigenschaften des Werkstoffs.

Ein Frühwarnsystem zur frühzeitigen Erkennung von Erdfällen und dergleichen ist in KR 101244304 B1 beschrieben. Vorgesehen sind aber Drucksensoren, die den senkrecht zur Ebene des Geogitters anstehenden Bodendruck messen. Die Gewichtskräfte der aufliegenden Bodendeckschichten korrespondieren aber nicht direkt mit der Belastung des Geogitters durch Zugspannungen. Somit kann zwar eine Veränderung im Boden erkannt werden, aber es kann nicht gemessen werden, ob das als Sicherung eingebaute Geogitter durch diese Veränderung nur mäßig belastet wird, so dass keine sofortige Beseitigung der Schadstelle erforderlich ist, oder so stark belastet wird, dass ein sofortiges Eingreifen geboten ist.

Bekannt sind außerdem sogenannte Fiber-Bragg-Gitter. Dabei handelt es sich um faseroptische Sensoren, die in die Basisstruktur der Geokunststoffbewehrungen eingearbeitet sind. Fiber-Bragg-Gitter ermöglichen hochfrequente und vergleichsweise hochauflösende Messungen. Wie bei verteilter faseroptischer Messtechnik auch, ist der Einsatzbereich von Fiber-Bragg-Gittern mit ca. 1% Dehnung begrenzt. Außerdem sind Fiber-Bragg-Gitter, ebenso wie polymeroptische Fasern, äußerst temperaturempfindlich, denn die Faser erfährt eine Längenänderung unter Temperatureinfluss. Auch der Brechungsindex ändert sich. Ohne eine Temperaturkompensation würde in solchen Fällen eine Dehnung gemessen, die nicht durch eine mechanische Spannung, sondern allein durch Temperaturschwankungen verursacht wurde. Die Kompensation des Temperatureinflusses erfordert apparativen und rechnerischen Aufwand.

Die CN 203 320 507 U bezieht sich auf eine Beanspruchungsmessung bei einem Geogitter, macht jedoch keine Aussagen dazu, wie die konkrete Sensoranordnung im Geogitter erfolgen soll.

US 4 429 580 A bezieht sich auf ein textiles Flächengebilde, nicht aber auf ein Geogitter. Die beschriebenen Wirkmechanismen in den Laststrängen eines Gitters sind jedoch unterschiedlich zu einem mehrachsig belasteten, vollflächigen Textil.

Die US 2016/341614 A1 bezieht sich auf die Überwachung eines Geogitters zur Erkennung von Erdfällen, wobei die Spannungen jedoch sämtlich vom Rand aus gemessen werden sollen. Dies soll durch eine runde und mehrlagige Querschnittsstruktur der Gitterbestandteile erreicht werden. Bei Gittern mit Laststrängen in Bandform ist das Detektionsverfahren nicht anwendbar.

Die Veröffentlichung DE 20 2004 020 950 U1 bezieht sich auf eine Vorrichtung zur Bestimmung der Zugkraft in gespannten Zugmitteln, und zwar insbesondere in Seilen in Aufzügen. Ein Einsatzsensor, der in ein aufgetrenntes Band eingesetzt wird, ist nicht offenbart. Beschrieben ist ein Ansatzsensor, der für die Prüfung von Drahtseilen für Aufzüge ausgelegt ist. Jedoch zeigen metallische Drahtseile einen anderen Zusammenhang zwischen Spannung und Dehnung als Kunststoff-Geogitter.

In der Veröffentlichung XP055623152, H. Zanzinger, Gartung, E.: 7th International Conference on Geosynthetics, 2002-09-01, Nice, France, URL: https://www.researchgate.net/profile/Helmut Zanzinger/-publication/305723319 Performance of a geogrid reinforced railway embankment on piles/links/579c784-f08ae5d5e1e14b819/Performance-of-a-geogrid-reinforced-railway-embankment-on-piles.pdf ist die Lastüberwachung bei einem Geogitter beschrieben. Direkt am Geogitter werden Spannung und Dehnung gemessen, jedoch werden die daraus erhaltenen Werte mit den Ergebnissen gleichzeitiger Messungen, welche vertikale Bodenverschiebungen in der Nähe der Messstelle erfassen, korreliert und dadurch hinsichtlich ihrer Stichhaltigkeit hinterfragt.

Die Aufgabe der vorliegenden Erfindung liegt somit darin, bei einem Geogitter vor dem Einbau und insbesondere auch nachträglich, wenn also das eingebaute Geogitter bereits mit wenigstens einer Deckschicht überdeckt ist, den aktuellen Belastungszustand zu bestimmen und ggf. über dessen Betrachtung über die Zeit zusätzlich eine Vorhersage der Lebensdauer des Geogitters vornehmen zu können.

Diese Aufgabe wird durch ein Verfahren zur Lastüberwachung und zur Bestimmung der Lebensdauer von geokunststoffbewehrten Erdkörpern mit den Merkmalen des Anspruchs 1 gelöst.

Die Erfindung basiert also auf einer oder mehreren punktuellen Kraftmessungen an dem Geokunststoff durch extern angebrachte Kraftaufnehmer. Der Vorteil der Verwendung einer solchen Messmethode für den vorliegenden Anwendungszweck besteht insbesondere darin, dass eine Kraftmessung eindeutig ist. Die Kraft wird direkt gemessen und nicht - wie im Stand der Technik - indirekt über eine Dehnungsmessung und Materialeigenschaften, die dem Einfluss von Zeit und Umwelt unterworfen sind, zurückgerechnet.

Besonders vorteilhaft ist die Verwendung eines Geogitters als Geokunststoffbewehrung in einem Bauwerk, denn es hat neben seiner eigentlichen Bewehrungsfunktion noch den Vorteil hat, dass es ein Messraster ausbildet, das eine einfache Platzierung eines Sensors an einer bestimmten Stelle oder mehrerer Sensoren in einer zweidimensionalen Messanordnung ermöglicht. Die Platzierung kann durch Abzählen der Maschen erfolgen und erfordert ansonsten keine Vermessungsarbeiten. Das Geogitter ist somit Bewehrung und Sensorträger zugleich.

Für die praktische Durchführung des erfindungsgemäßen Verfahrens ergibt sich ein weiterer Vorteil dadurch, dass weder eine spezielle Auswahl eines bestimmten Geogittertyps noch eine spezielle Dimensionierung notwendig sind.

Weiterhin besteht der Vorteil einer Gitterstruktur darin, dass an die einzelnen Stränge in Längs- und/oder Querrichtung leicht ein Kraftmesssensor angesetzt werden kann. Der wenigstens eine punktuell platzierte und von außen an die Geokunststoffbewehrung angesetzte Kraftsensor erlaubt jederzeit die nachträgliche zerstörungsfreie Bestimmung des Belastungsgrades, wenn der Sensor zuvor an dem zu vermessenden Geogitter oder mit Hilfe von Referenzproben kalibriert worden ist. Eine bestehende Konstruktion kann also jederzeit vermessen werden.

Bei den im Rahmen des erfindungsgemäßen Verfahren vorgesehenen Geogittern handelt es sich in der Regel um gewebte oder geraschelte Geogitter, also um solche Formen, bei denen stärker ausgeprägte Laststränge vorgesehen sind, welche in Belastungsrichtung verlaufen, sowie schwächer ausgeprägte Querstege, die keine nennenswerte Lastübertragung ermöglichen, sondern nur die geometrische Lage der parallelen Laststränge vorgeben, also für die Gitterstruktur erforderlich sind. Somit kann jeder Laststrang rechnerisch für sich betrachtet werden, wobei Einflüsse aus Nachbarsträngen vernachlässigbar sind.

Der Einsatz der erfindungsgemäßen Kraftmessung lässt sich problemlos auf andersartig gefertigte Geogitter übertragen, insbesondere auf alle Formen sogenannter gelegter Geogitter aus verschweißten und verklebten Stäben und Streifen oder gereckter und gestreckter Geogitter. Außerdem ist der Einsatz auch an solchen Geogittern möglich, die in Ausrollrichtung wie auch quer dazu die gleichen Festigkeitseigenschaften besitzen.

Nach der Erfindung ist als weitere mögliche Maßnahme vorgesehen, wenigstens einen der Laststränge im Geogitter zu unterbrechen und durch Einbau einer Kraftmess-Sensoreinheit, die eine Brücke bildet, wieder zu schließen. Die Kraftmess-Sensoreinheit umfasst wenigstens einen Dehnungsmessstreifen (DMS), der auf ein insbesondere metallisches Substrat aufgebracht ist. Somit kann in an sich bekannter Weise aus der Verformung des Sensorbasiselements, auf dem das elektronische Sensorelement aufgebracht ist, auf die einwirkenden Kräfte rechnerisch geschlossen werden. Das Sensorelement besitzt wenigstens einen Dehnungsmessstreifen. Die Relation zwischen der Dehnung des Sensorbasiselements und der Kraft ist über das HOOKE'sche Gesetz vorgegeben. Damit ist es möglich, die Kraft in einem Laststrang des Geogitters an einer Messposition zu messen, die stellvertretend für einen Teilflächenbereich eines Geogitters steht. Dazu wird wenigstens ein Laststrang aufgetrennt und wieder geschlossen , wobei direkt beim Einbau der Kraftmess-Sensoreinheit oder danach jegliche Lose aus dem aufgetrennten Laststrang entfernt wird. Die Spannung in dem mit der Kraftmess-Sensoreinheit überbrückten Laststrang ist also vorzugsweise gerade etwas über null. Mitunter kann auch eine größere Vorspannung aufgebracht werden, sofern auch in den benachbarten Laststrängen eine Vorspannung anliegt.

Diese Sensoranordnung ist sehr einfach montierbar, und es werden punktuell nur wenige Sensoren pro Flächenbereich benötigt, während nach dem Stand der Technik alle Stränge des Gitters in besonderer Weise ausgerüstet sein müssen, um Messdaten erfassen zu können.

Überraschenderweise kann nach der genannten Ausführungsform der Erfindung allein durch die Einfügung der Kraftmess-Sensoreinheit in den zuvor unterbrochenen Laststrang ein selbst-nivellierendes Messsystem geschaffen werden:

- Durch die Vielzahl der nebeneinanderliegenden Laststränge wird die anliegende Zugkraft im Wesentlichen gleichmäßig auf die parallelen Laststränge im Geogitter verteilt.

- Ist die Vorspannung beim Einbau der Kraftmess-Sensoreinheit in den unterbrochenen Laststrang zu hoch gewählt, wird dieser Laststrang zunächst höher belastet als die benachbarten Stränge. Die höhere partielle Kraft in dem mit der Kraftmess-Sensoreinheit versehenen Laststrang führt jedoch auch zu einem schnelleren Kriechverhalten, d. h. der aus einem polymeren Werkstoff gefertigte Laststrang wird stärker gedehnt als die anderen, sodass sich nach relativ kurzer Zeit die Situation ergibt, dass der unterbrochene Laststrang und seine Nachbarstränge gleichmäßig gedehnt und mit jeweils annähernd gleichen Kräften belastet werden.

- Wenn im umgekehrten Fall die Vorspannung im unterbrochenen Laststrang zu gering ist, werden die benachbarten Laststränge stärker belastet als der unterbrochene Laststrang. Auch in diesem Fall kommt es zu einem Kriechverhalten, sodass sich mit einer gewissen zeitlichen Verzögerung ebenfalls die Situation einstellt, dass irgendwann alle benachbarten Stränge gleichmäßig gedehnt sind und entsprechend gleiche Teilkräfte übertragen.

Für die Schaffung eines selbst-nivellierenden Messsystems ist es lediglich erforderlich, die Befestigung der Kraftmess-Sensoreinheit im unterbrochenen Laststrang so vorzunehmen, dass sich die Strangenden nicht aus der Kraftmess-Sensoreinheit herausziehen können, und die Befestigung außerdem so straff auszuführen, dass sich der selbst-nivellierende Effekt einstellen kann. Sollte die Verbindung nämlich deutlich zu locker sein, wäre bei einer typischen Belastungssituation der Verformungsweg in den Nachbarsträngen nicht lang genug, um auch in dem unterbrochenen Laststrang eine Spannung hervorzurufen. Mit anderen Worten muss beim Einbau der Kraftmess-Sensoreinheit darauf geachtet werden, dass die Vorspannung in dem Laststrang größer oder gleich null ist. Sobald dann eine Last auf das Geogitter wirkt, wird eine Zugspannung hervorgerufen, die auch zu einer Dehnung in dem mit der Kraftmess-Sensoreinheit versehenen Laststrang führt.

Durch diesen selbst-nivellierenden Effekt kann mit wenigen eingebauten Sensorelementen rein rechnerisch, aber zuverlässig auf die Belastung mehrerer paralleler Nachbarstränge geschlossen werden. Wichtig hierbei ist, dass das verwendete Geogitter von seinem Aufbau her so gestaltet ist, dass zwischen den parallelen Laststrängen keine Kraftübertragung über die Querstege erfolgt.

Durch eine an sich bekannte Ausbildung der Kraftmess-Sensoreinheit mit wenigstens zwei um 90° zueinander versetzten Dehnungsmessstreifen kann eine Temperaturkompensation problemlos erreicht werden.

Das wenigstens eine Sensorelement ist nach der Erfindung an eine Datenerfassungs- und Überwachungseinheit angeschlossen. Es können dauerhaft oder punktuell zu vorbestimmten Zeitpunkten Kräfte gemessen und Zugspannungen daraus berechnet werden.

Sollten Schubspannungen im Bauwerk auftreten, die parallel zur Ebene des Geogitters wirken, so werden im Geogitter Dehnungen hervorgerufen, die mit dem erfindungsgemäßen Verfahren registrierbar sind. Bei einem sich abzeichnenden Schadensfall im Bauwerk kann eine Warnung ausgegeben oder sogar dem Schaden rechtzeitig entgegengewirkt werden.

Ein Schadensfall kann aber auch dadurch entstehen, dass Verschiebungen oder Erosionen in der Ebene, in der das Geogitter eingebaut ist, erfolgen und das Geogitter seine randseitige Einspannung verliert. Infolge solcher Vorgänge können Zugspannungen in den Laststrängen vollständig abgebaut werden, sodass bei der Überwachung der Daten, die durch die Kraftmess-Sensoreinheit im Geogitter bereitgestellt werden, auch ein solcher Versagensfall frühzeitig registriert werden kann.

Wenn Hohlräume im Unterbau des Geogitters entstehen, dann bleibt die von oben einwirkende Last bestehen, jedoch ist die Abstützung für die von oben auf das Geogitter wirkenden Lasten weggebrochen. Durch die Belastung mit senkrecht zur Verlegeebene des Geogitters wirkenden Kräften kommt es im Bereich der Schadstelle zu einer hohen Spannung im Geogitter. Diese Belastung ist nach der Erfindung frühzeitig registrierbar, sodass Gegenmaßnahmen ergriffen werden können, bevor es zu einem sich bis zur Oberseite des Bauwerks erstreckenden Erdfall kommt.

Auf Basis der im Feld gemessenen Belastungsgrade wiederum kann in einem weiteren Schritt die Ermittlung der Lebensdauer des Geokunststoffes erfolgen. Hierfür stehen unterschiedliche Modelle der Schadensakkumulation zur Wahl: von linearen bis hin zu nichtlinearen Modellen, die den Einfluss der Lastvorgeschichte des Geogitters auf die Lebensdauer auf komplexe Art und Weise berücksichtigen. Alle vorhandenen Kriterien der Langzeitfestigkeit berücksichtigen die Tatsache, dass sich lange vor dem Eintreten des Bruches des Geogitters Mikroschäden im Material akkumulieren. Um diesen Umstand darzustellen, wird der Begriff der s.g. Gesamtschädigung eingeführt. Überschreitet die Gesamtschädigung den Wert 1, so ist bei Erreichen der kritischen Lasteinwirkung tatsächlich mit einem unmittelbaren Bruchversagen zu rechnen.

Beispielhaft kann die Gesamtschädigung in einem aus polymerem Material hergestellten Geokunststoff als Funktion der Kraft oder Spannung nach MOSKVITIN gemäß der folgenden Formel ermittelt werden:

$$\eta = (m+1)\int_0^t (t-\tau)^m \frac{d\tau}{t^{1+m}[\sigma(\tau)]}$$

*Mit:*

*t*      *Zeit zum Bruch*
*m*      *Konstante, die die Nichtlinearität der Schadensakkumulation berücksichtigt; wird experimentell ermittelt.*
*t[σ(τ)]*      *experimentell ermittelte Spannungsfunktion*

Die Zeit zum Bruch bei konstanter Spannung kann für die meisten Geogitter durch Potenzgesetz approximiert werden:

$$t = B\sigma^{-b}$$

*Mit:*

*B, b - empirisch ermittelten Größen*

Unter Berücksichtigung der Potenzgesetz-Abhängigkeit nimmt die Gesamtschädigung des Geokunststoffes die folgende Form an:

$$\eta = \frac{1+m}{B^{1+m}} \int_0^t (t-\tau)^m \sigma^{(1+m)b}(\tau)d\tau$$

Mit Hilfe der Messwerte aus dem Feld können nun also die Belastungskollektive σ als Funktion der Zeit erfasst und durch "best fit Funktion" approximiert werden.

Die Ermittlung der Gesamtschädigung und Abschätzung einer gegebenenfalls verbleibenden Lebensdauer kann dann mit Hilfe entsprechender Berechnungsalgorithmen z.B. mit Hilfe einer Software durchgeführt werden.

Für die praktische Durchführung des erfindungsgemäßen Verfahrens wird eine Geogitter-Messanordnung eingesetzt, die neben dem Geogitter wenigstens einen Kraftsensor umfasst, der entweder von außen an wenigstens einen Strang des Geogitters angesetzt ist oder der in einen unterbrochenen Strang eingesetzt ist und diesen wieder schließt.

Nach der Erfindung ergibt sich ein weiterer Vorteil dadurch, dass weder eine spezielle Auswahl oder Ausbildung eines bestimmten Geogittertyps noch eine spezielle Dimensionierung für die Geogitter-Messanordnung erforderlich sind. Dies erlaubt eben auch, bestehende Geogitterbewehrungen durch Ansetzen einer oder mehrerer Sensoren nachzurüsten und darüber eine Geogitter-Messanordnung zu schaffen.

Ort und Anzahl der Sensoren sowie bei mehreren Sensoren die Positionierung zueinander wird in Abhängigkeit von dem zu prüfenden oder zu überwachenden Bauwerk getroffen.

Für die Wahl der Messpunkte gelten die allgemeinen Grundsätze der experimentellen Spannungsanalyse. Bei der funktionsgerechten Dimensionierung der mechanisch beanspruchten Konstruktion ist es demnach erforderlich, im Rahmen von theoretischen Überlegungen und angemessenen analytischen Berechnungen nach anerkannten technischen Regeln oder z.B. mit Hilfe der Methode der Finiten-Elemente Kenntnis über die Art und örtliche Verteilung der Beanspruchungen zu erlangen.

Die entscheidenden Größen für die Erdkonstruktion sind dabei die maximal auftretenden Kräfte im Geogitter, die letztendlich die nominelle Festigkeit des Geogitters festlegen. Diese Kräfte gilt es im Vorwege, also hinsichtlich ihrer Größe und Örtlichkeit, und in Abhängigkeit von der Nutzungsdauer des Bauwerks bestmöglich zu bestimmen.

Die experimentelle Kraftanalyse stellt die Möglichkeit dar, die im Bauwerk angenommenen Kraftverläufe nachzuprüfen und dient somit als Bindeglied zwischen den theoretischen Berechnungen und den Verhältnissen im realen Bauwerk. Anzahl und Ort der benötigten Sensoren sollten im Idealfall somit im Rahmen einer Sensitivitätsanalyse vorab ermittelt werden.

Die Positionierung der Kraftsensoren erfolgt dementsprechend an kritisch belasteten Stellen oder an Stellen von besonderem Interesse in Abhängigkeit von der Geometrie des Bauwerkes und seines Lastzustandes.

Gibt es keine vorhersebare kritische Zone, dann ist eine entsprechend großzügige Ausstattung des zu vermessenden Geogitters mit Sensoren sinnvoll.

Ein immenser Vorteil der erfindungsgemäßen Kraftmessung ist dabei, dass ein Kraftsensor bei angemessener Zugänglichkeit des Geogitters nachträglich angebracht werden kann und im Zweifelsfall mit nur einem Sensor zwar zeitversetzt, aber an beliebig vielen Messpunkten gemessen werden kann. Auch eine spezielle Einbauweise des Geogitters ist nicht erforderlich.

Die Befestigung der Kraftsensoren am Geogitter zur Ausbildung einer Geogitter-Messanordnung ist dabei denkbar einfach. Nach Kalibrierung des Sensors für den zur Vermessung vorgesehenen Geokunststoff muss der Sensor vor Ort lediglich mit einfachem Werkzeug wie einem Schraubenschlüssel an dem Geokunststoff befestigt werden.

Die Erfindung unterscheidet zwischen einer Geogitter-Messanordnung mit einem Ansatzsensor oder mit einem Einsatzsensor:

- Bei einem Ansatzsensor wird die Sensorvorrichtung von außen an einen durchgängigen Strang des unveränderten Geogitters angesetzt.
- Bei einem Einsatzsensor wird ein Strang des Geogitters aufgetrennt und das Sensorgehäuse schließt den unterbrochenen Strang wieder.

Die Kalibrierung des Ansatzsensors erfolgt individuell für jeden Geogittertyp, da die Sensorempfindlichkeit von der Querschnittsgeometrie des Zuggliedes abhängt. Dafür wird vor dem Einbau das Gitterelement, also der jeweilige Gitterstrang mit dem installierten Sensor, in einer Zugprüfeinrichtung eingespannt und mit einer definierten Zugkraft beaufschlagt. Das Sensorsignal wird dann in Abhängigkeit von der Zugkraft im Gitterelement ermittelt und als Referenzmessung abgespeichert. Beim späteren Einbau in die Geogitter-Messanordnung kann auf die Referenzwerte zurückgegriffen werden. Bei dem Ansatzsensor ist eine Vorspannung bei oder nach dem Einbau nicht erforderlich. Dies ist darauf zurückzuführen, dass die beabstandeten Widerlager, auf denen der Strang aufliegt, als Gleitlager ausgebildet sind, die vorzugsweise eine Seitenführung besitzen. Mit auftretender Belastung des Geogitters tritt automatisch eine Straffung ein. Bei Böschungsbauwerken tritt diese Belastung in der Regel bereits mit dem Einbau der ersten Deckschichten ein. Bei horizontaler Einbaulage z. B: zur Erdfallsicherung tritt die Straffung erst im Schadensfall ein und löst ein entsprechendes Signal aus.

Eine weitere vorteilhafte Ausführung des erfindungsgemäßen Verfahrens sieht eine Kombination mit einer Verformungsmessung vor, z.B. einer verteilten Sensorik zur Detektion der Bauwerksbereiche entlang der gesamten Bewehrungslänge, welche am stärksten belastet sind. Daraus lassen sich weiter verbesserte Aussagen zum Belastungsgrad machen.

Neben den vorgenannten Überlegungen zur Identifikation des korrekten Messpunktes ist eine Kombination aus verteilter Messung der Verformung z.B. mit POF - Sensoren (polymeroptischen Fasern) sinnvoll.

Die Erfindung wird nachfolgend anhand einer beispielhaften Ausführung des Verfahrens und mit Bezug auf die Zeichnungen näher erläutert. Die Figuren zeigen im Einzelnen:

Fig. 1     einen Ausschnitt eines Geogitters mit einem unterbrochenen Laststrang und einer Kraftmess-Sensoreinheit in Draufsicht;

Fig. 2     einen Ausschnitt eines Geogitters mit einer in einen Laststrang eingesetzten Kraftmess-Sensoreinheit in Draufsicht;

Fig. 3, 4     je ein Ausschnitt eines Geogitters in schematischer Ansicht von oben mit einer fehlerhaft verlegten Kraftmess-Sensoreinheit in Draufsicht;

Fig. 5     ein Diagramm mit dem in einem Laststrang gemessenen Kraftverlauf über der Zeit;

Fig. 6     eine Deponie mit Oberflächenabdichtung im Querschnitt;

Fig. 7     eine Kraftmess-Sensoreinheit gemäß einer ersten Ausführungsform in perspektivischer Ansicht;

Fig. 8     eine Kraftmess-Sensoreinheit gemäß einer zweiten Ausführungsform in perspektivischer Ansicht;

Fig. 9     die Kraftmess-Sensoreinheit nach Fig. 7 an einem Geogitter, in perspektivischer Ansicht von oben;

Fig. 10     die Kraftmess-Sensoreinheit an dem Geogitter, in perspektivischer Ansicht von unten;

Fig. 11     die Kraftmess-Sensoreinheit mit einer Abdeckung, in perspektivischer Ansicht von oben; und

Fig. 12     die Kraftmess-Sensoreinheit an dem Geogitter, in seitlicher Ansicht.

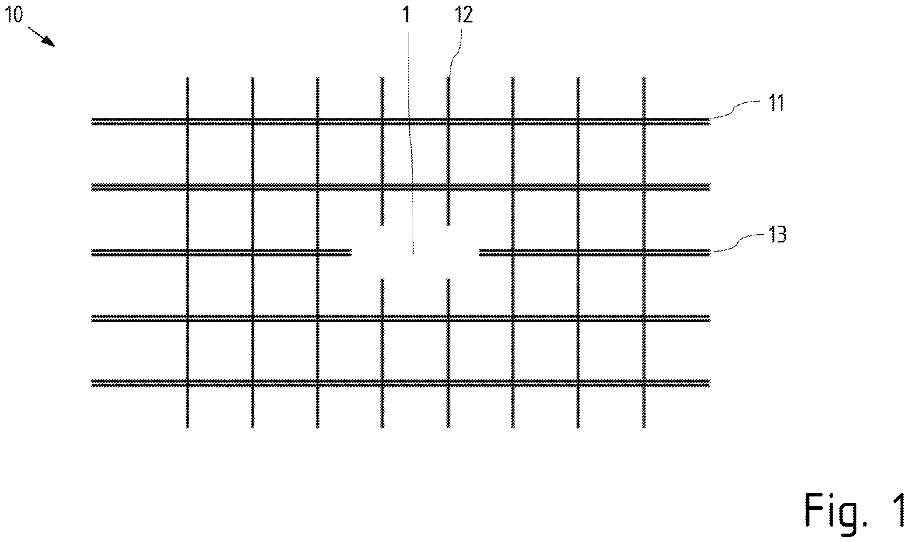

Figur 1 zeigt eine schematische Ansicht eines Ausschnitts eines Geogitters 10 mit mehreren parallelen Laststrängen 11, 13, welche durch textile Querstege 12 miteinander verbunden sind. An einer Messposition 1 ist der Laststrang 13 aufgetrennt, um einen Einsatzsensor dort zu platzieren.

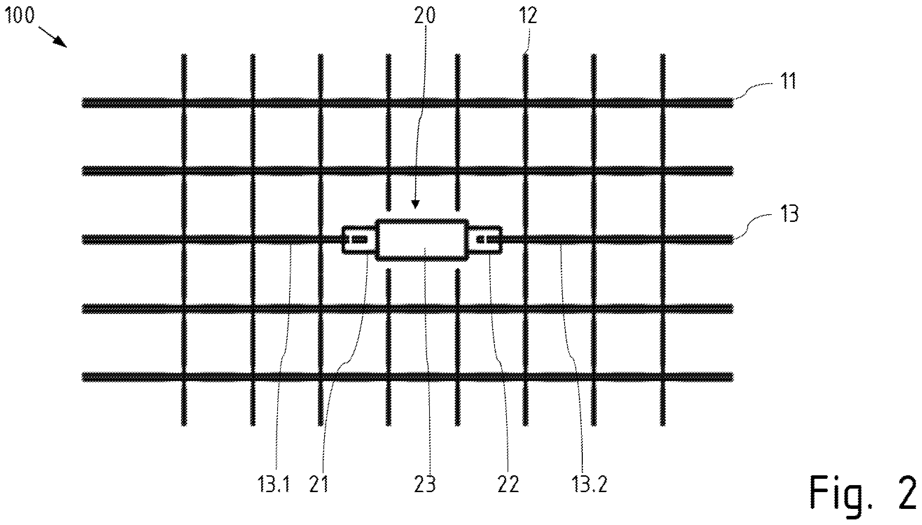

Figur 2 zeigt die fertige Geogitter-Messanordnung 100 mit dem ausgelegten Geogitter 10 vor Einbau der Deckschicht. Die freien Strangenden 13.1, 13.2 des aufgetrennten Laststrangs 13 sind über eine eingefügte Kraftmess-Sensoreinheit 20 wieder verbunden worden. Dazu besitzt die Kraftmess-Sensoreinheit 20 beidseitig je ein Terminalelement 21, 22, in das die Strangenden 13.1, 13.2 eingefasst sind. Wenigstens eines der Terminalelemente 21, 22 ist axial, also in seiner Position in Längsrichtung des Laststrangs 13, und relativ zu einem Basiselement 23 verstellbar.

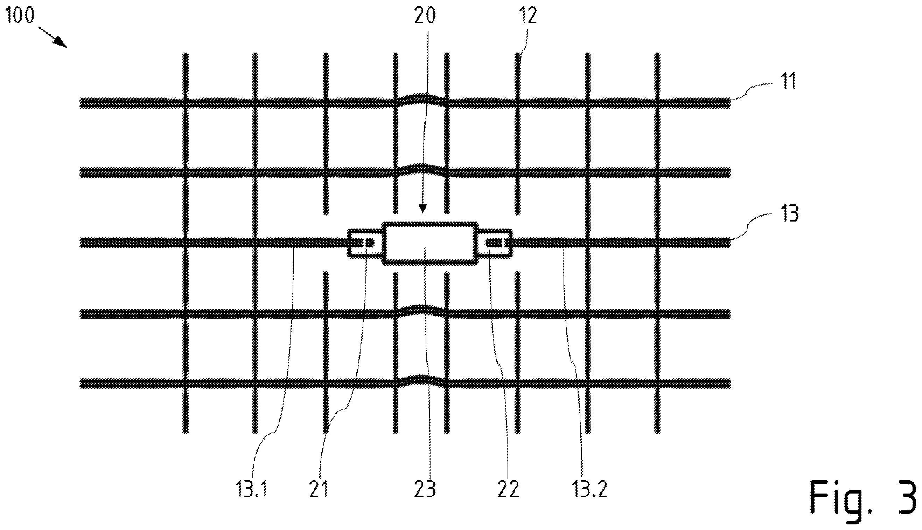

Figur 3 zeigt die Geogitter-Messanordnung 100 nochmals, wobei hier bewusst dargestellt ist, dass die Länge des an der Messposition 1 aus dem Laststrang 13 herausgetrennten Stücks nicht richtig bemessen wurde und/oder die an der Kraftmess-Sensoreinheit 20 vorhandenen Einstellmöglichkeiten für die Längenanpassung zwischen den Terminals 21, 22 nicht richtig genutzt worden sind. Der mit dem Sensorelement 20 überbrückte Laststrang 13 ist somit kürzer als die benachbarten Laststränge 11. Somit werden die gesamten Kräfte in dem Flächenabschnitt des Geogitters ausschließlich über den Laststrang 3 und die eingesetzte Kraftmess-Sensoreinheit 20 geleitet. Die gemessenen Kräfte sind dort folglich höher als rechnerisch für das Geogitter insgesamt erwartet, aber immer noch nicht ausreichend, um die Laststränge 11 in der Nachbarschaft zu straffen und somit eine gleichmäßige Übertragung der Kräfte über die parallelen Einzelstränge 11, 13 zu erreichen.

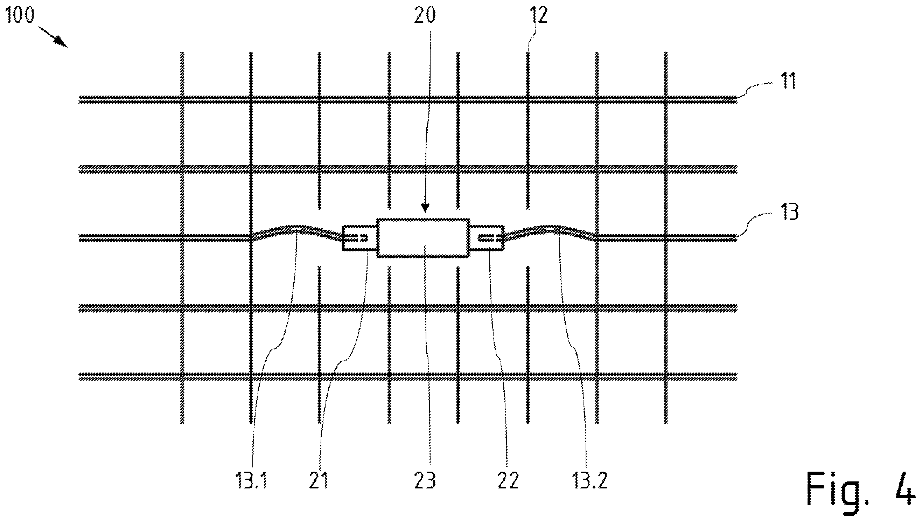

In Figur 4 ist der umgekehrte Fall dargestellt. Dort ist der Abstand zwischen den Terminalelementen 21, 22, welche die Strangenden 13.1, 13.2 einklemmen und mit der Kraftmess-Sensoreinheit 20 verbinden, nach der Montage zu groß, sodass es in dem Laststrang 13 zu einer Schlaufenbildung kommt. Bei den in den benachbarten Laststrängen 11 im normalen Betrieb auftretenden Dehnungen werden die Schlaufen nicht mehr gestrafft, und folglich können keine Kräfte an der Kraftmess-Sensoreinheit 20 gemessen werden.

Wesentlich ist also für die Verwendung einer Geogitter-Messanordnung 100 mit einem Einsatzsensor zur Kraftmessung, dass die Strangenden 13.1, 13.2 zusammen mit der Kraftmess-Sensoreinheit 20 so in der Länge abgestimmt sind, dass weder der aufgetrennte Laststrang 13 noch die benachbarten Laststränge 11 ungestrafft liegen, wenn das Geogitter von beiden Seitenkanten aus gestrafft wird. Vielmehr müssen alle Laststränge idealerweise ohne Vorspannung gestreckt nebeneinander liegen oder mit der gleichen Vorspannung gestrafft sein.

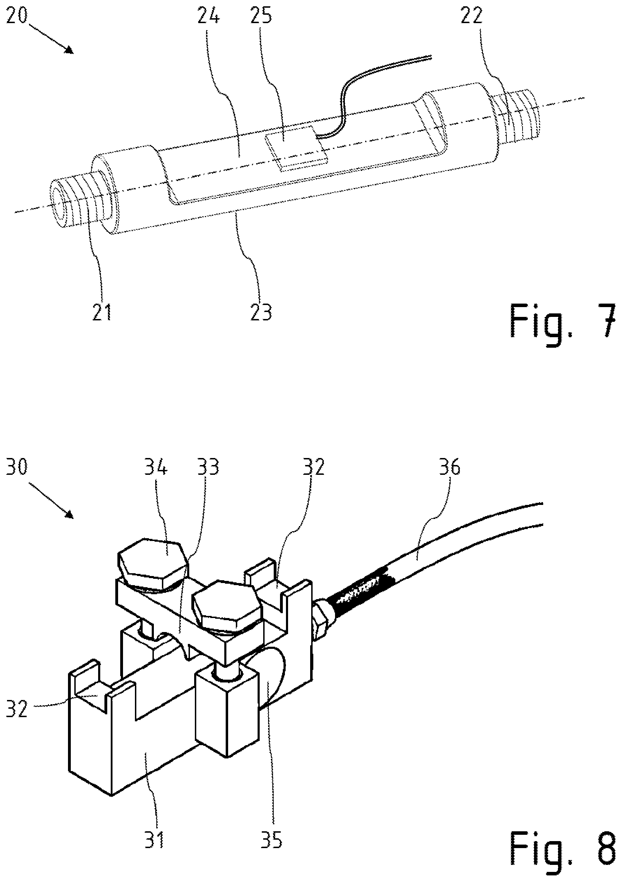

In Figur 7 ist die Kraftmess-Sensoreinheit 20 gemäß einer möglichen Ausführungsform als Einsatzsensor perspektivisch dargestellt. Sie umfasst ein Basiselement 23, das an seinen beiden Stirnseiten je eine Gewindebohrung aufweist. Darin wird jeweils ein mit einem Außengewinde versehenes Terminalelement 21, 22 eingeschraubt. Die Strangenden 13.1, 13.2 (siehe Figur 2) werden durch eine Bohrung in den Terminalelementen 21, 22 geführt und an dem zum Basiselement 23 gewandten Seite geklemmt, verklebt oder durch einen Spleiß oder einen Knoten verdickt und formschlüssig festgelegt. Sofern die Festlegung durch eine im Terminalelement aufgenommene Verdickung des Strangendes erreicht wird, sollte die Bohrung im Terminalelement 21, 22 in einer kegeligen oder balligen Mündung auslaufen, um Spannungsspitzen an dieser Stelle zu vermeiden.

Das Basiselement 23 besitzt eine Messfläche 24, die sich in etwa auf Höhe der Mittelachse Kraftmess-Sensoreinheit 20 befindet. Auf die Messfläche 24 ist ein Dehnungssensorelement 24 aufgeklebt. Das Basiselement 23 besteht aus Stahl oder Aluminium oder einem anderen homogenen Werkstoff mit bekanntem Elastizitätsmodul, damit aus der am Basiselement 23 elektronisch gemessenen Dehnung die dazu proportionalen Kräfte in den Laststrängen rechnerisch ermittelt werden können.

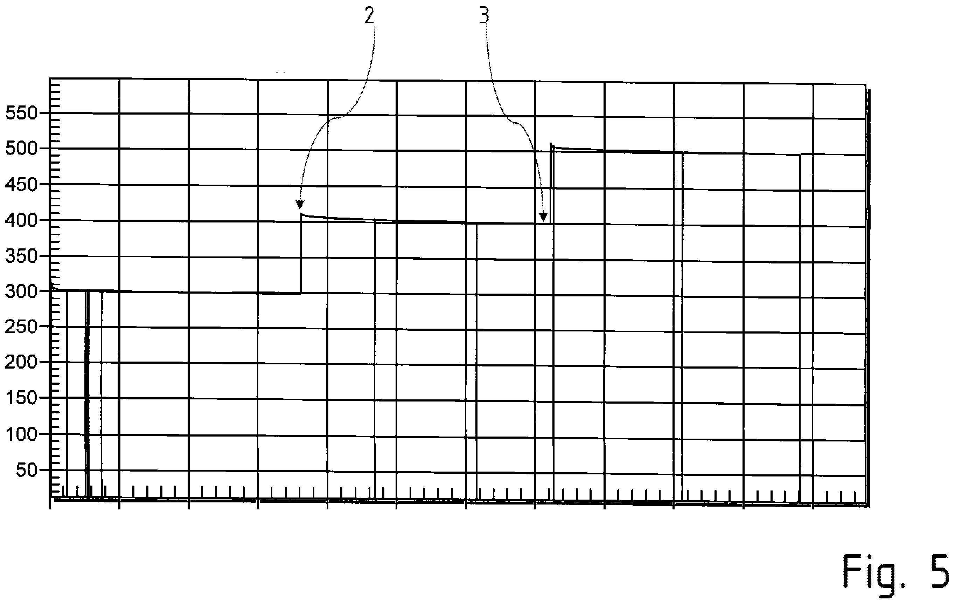

Der selbst-nivellierende Effekt in einer nach der Erfindung aufgebauten und betriebenen Messanordnung 100 wird unter Bezug auf Figur 5 erläutert. Hierin ist in einem Diagramm der Kraftverlauf über der Zeit aufgetragen. Diesem Diagramm liegt folgender Versuch zugrunde:

Ein Abschnitt eines Geogitters mit drei parallelen Laststrängen ist beidseitig in einem Messgestell mit zwei parallelen Jochen eingespannt. Zwischen den Jochen sind zwei Gewindespindeln mit je einer Kraftmessdose eingebaut. Der mittlere der drei Laststränge des Geogitterabschnitts ist nach der Erfindung aufgetrennt, wobei die Lücke durch eine eingesetzte Kraftmess-Sensoreinheit wieder geschlossen worden ist. Die Terminals sind so eingestellt worden,
dass die Strangenden gestrafft, aber vorspannungsfrei sind. Über das Messgestell werden die drei gemeinsam eingespannten Laststränge mit einer bestimmten Kraft beaufschlagt, und zwar insgesamt mit der dreifachen rechnerischen Nennkraft, welche in jedem Laststrang einzeln gelten soll. Der aufgenommene Graph gibt die über die Kraftmess-Sensoreinheit im mittleren Laststrang gemessene Kraft wieder.

Betrachtet wird ein mittlerer Zeitabschnitt des Versuchs zwischen den Punkten 2 und 3, bei dem die Sollkraft pro Strang auf 400 N festgelegt worden ist. Entsprechend wurde der getestete, zwischen den Jochen eingespannte Abschnitt des Geogitters mit der dreifachen Kraft, insgesamt mit 1200 N belastet.

Am Verlauf des Graphen ist erkennbar, dass im mittleren Laststrang zunächst eine Kraft anlag, die höher war als die vorgegebene Sollkraft. Hier war also die Verkürzung des unterbrochenen Laststrangs im Vergleich zu den Längen in den Nachbarsträngen geringfügig zu stark, so dass es zu einer Überbelastung des zentralen Laststrangs bei Eintreten der Kraftbeaufschlagung kam. Es erfolgt sehr kurzfristig ein als Peak sichtbarer Kraftabfall, der auf sofort eintretende Setzungen in der Verbindung zwischen den Strangenden und den Terminals sowie in den Gewinden der Terminals mit dem Basiselement zurückzuführen ist. Daran schließt sich ein sehr kontinuierlicher Kriechvorgang in dem Laststrang selbst an, der im Bereich des Punktes 3 endet.

Dort ist dann die über die Kraftmess-Sensoreinheit gemessene Kraft im Laststrang auf dem vorgegebenen Soll-Niveau angekommen, das heißt, die zwischen den benachbarten Laststrängen anfangs noch bestehenden Unterschiede sind aufgrund des Kriechens ausgeglichen. Ab dann werden alle benachbarten Laststränge gleich belastet.

Nach dem Punkt 3 wird die Soll-Kraft pro Strang auf 500 N erhöht und der beschriebene Vorgang wiederholt sich, ist aber nicht mehr so ausgeprägt, da bereits in den vorausgegangenen eine Straffung erfolgt ist.

Bei der Auswertung des Versuchs ist zu berücksichtigen, dass der in die Messapparatur eingespannte Probenabschnitt nur etwa die dreifache Länge des Sensorelements besitzt. Die Unterschiede im Dehnungsverhalten zwischen den beiden Strangenden und dem zentralen Abschnitt, der durch das Sensorelement gebildet ist, ist im Versuch somit deutlich größer als im Praxiseinsatz, wo die zu überwachenden Abschnitte regelmäßig 10 Meter und mehr betragen können. In der Praxis ist also der Einfluss des metallischen Sensorelements vernachlässigbar, und dementsprechend ist zu erwarten, dass nach einer einmaligen Kraftbeaufschlagung der Kriecheffekt einsetzt und seinen Abschluss findet, ohne dass er sich bei nachfolgenden stärkeren Belastungen wiederholt. Ohnehin findet in einem eingebauten Geogitter keine mehrfache sprunghafte Kraftbeaufschlagung wie in der beschriebenen Versuchsapparatur statt.

Figur 8 zeigt eine weitere Ausführungsform einer Kraftmess-Sensoreinheit 30, die als Ansatzsensor ausgebildet ist, das heißt, sie kann an einen nicht veränderten einzelnen Laststrang oder auch einen Quersteg des Geogitters angesetzt werden, und zwar auch nachträglich, wenn dieses bereits unter Spannung steht. Die Kraftmess-Sensoreinheit 30 umfasst eine im wesentlichen quaderförmige Basis 31, die an den beiden seitlichen Enden jeweils eine mit einer Nut versehene Überhöhung aufweist. Hierdurch werden Widerlager 32 zur Auflage eines Strangs des Geogitters ausgebildet. Die seitlichen Flanken der Nut dienen der Führung des Strangs und verhindern das Abrutschen der Kraftmess-Sensoreinheit 30. Wichtig ist aber, dass der Strang bei den anzunehmenden Kräften im Strang ungehindert über die Widerlager 32 gleiten kann, denn nach der Erfindung soll ja gerade keine Dehnung ermittelt werden, sondern eine Kraft. Daher ist ein wichtiges Merkmal der Erfindung, dass bei der zu verwendenden Kraftmess-Sensoreinheit 30 keine feste Einspannung des Strangs an den beabstandeten voneinander positionierten Widerlagern gibt.

Mittig zwischen den Widerlagern 32 ist ein verstellbares Joch 33 angeordnet. Dieses ist über zwei Stellschrauben 34 in Aufnahmen 37 an der Basis gelagert und befestigt. Das Joch 33 bildet einen Querbalken, der senkrecht zum Verlauf der Strecke zwischen den Widerlagern 32 und mittig darauf angeordnet ist. Es besitzt an seiner Unterseite ebenfalls eine nutförmige Einkerbung, um einen eingespannten Strang eines Geogitters führen zu können. Das Joch ist gegenüber der durch die Widerlager 32 gebildeten Auflagerebene verstellbar und kann an die Dicke des Laststrangs bzw. Querstegs angepasst werden. In der Regel wird das Joch jedoch bis zum Anschlag ausgefahren.

Erfindungswesentlich ist, dass bei der Verwendung der Kraftmess-Sensoreinheit 30, die als Ansatzsensor ausgebildet ist, der Sensor quasi "schwimmend" gelagert ist. Das heißt, es besteht nur die formschlüssige Seitenführung. In Längsrichtung gesehen wird der Sensor aber nicht mit dem Strang verbunden. Es besteht also keine mechanische Klemmung oder formschlüssige Verbindung. Der Sensor wird nur durch diejenige Reibung am Strang gehalten, die eintritt, wenn Kräfte in den Gitterstrang eingeleitet sind bzw. werden. Dies ist insofern wesentlich, als dass beim Einbau des Geogitters keine Vorspannung aufgebracht werden muss, um eine Lose zu beseitigen. Solange keine Kraft auf das Geogitter wirkt, wird auch am Sensor kein Messwert erhalten. Sobald eine Kraft wirkt, spannt sich zunächst der Strang allmählich, wobei die Kraftmess-Sensoreinheit nicht hinderlich wirkt. Die Belastung führt also zunächst zu einer Formänderung des Geogitters, die zwar nach der Erfindung als solche nicht messbar ist, die aber hinsichtlich des Ziels der Erfindung, das Geogitter auf Last und/oder Lebensdauer zu überwachen, auch nicht hinderlich ist, denn in der Formänderungsphase wird das Geogitter immer noch nicht belastet. Erst mit fortschreitender Belastung wird der Strang dann gestrafft und es baut sich eine Spannung auf, die als Kraft im Sensor messbar ist.

Die quaderförmige Basis 31 stellt einen Biegebalken dar, der üblicherweise aus Stahl besteht. An einem Sensoreinsatz 35 sind Dehnungsmessstreifen angebracht, die über ein Kabel 36 mit einer Auswerteinheit verbunden sind. Durch die bekannte Geometrie und den bekannten Werkstoff kann direkt aus der Verformung der Basis 31 auf die mit der Verformung einhergehende Kraft rechnerisch rückgeschlossen werden.

Außerdem wird bevorzugt an dem einzubauenden Geogitter selbst oder einem typgleichen Geogitter eine Kalibrierung der Kraftmess-Sensoreinheit 30 vorgenommen, um die gewonnen elektrischen Messsignale mit einer Kraft im Laststrang zu korrelieren. Das als Referenz verwendete Geogitter wird dazu in einer Prüfvorrichtung mit einer Prüfkraft beaufschlagt, und der damit hervorgerufene elektrische Messwert an der Kraftmess-Sensoreinheit kann dann später dem Betrag der Prüfkraft zugeordnet werden. Ebenso ist es möglich, das Joch 33 mechanisch zu verstellen, bis der von der Kraftmess-Sensoreinheit 30 ablesbare Messwert für die Kraft mit der beaufschlagten Prüfkraft übereinstimmt.

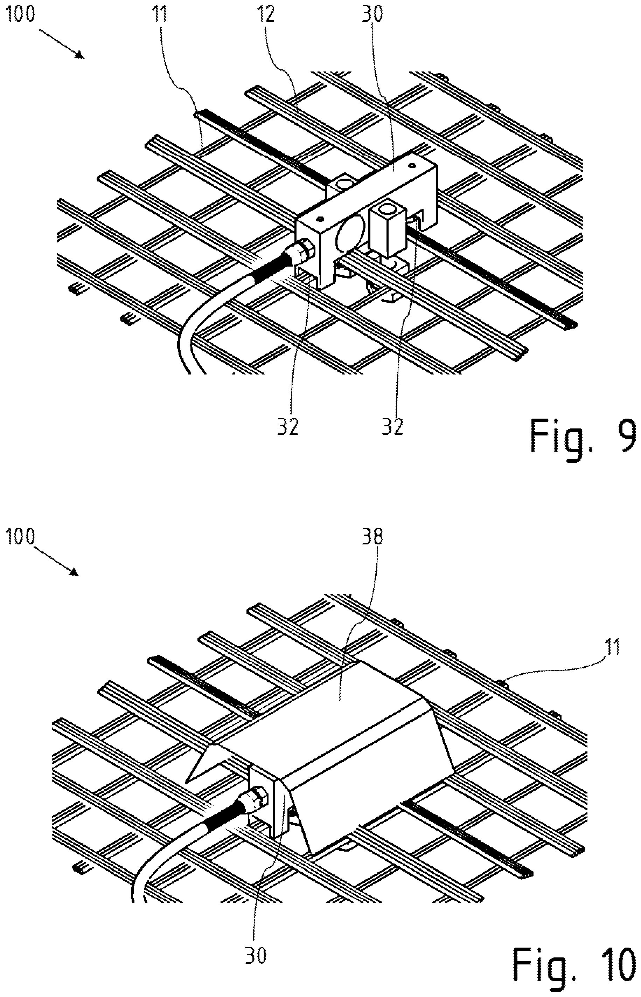

Figur 9 zeigt einen Ausschnitt eines Geogitters 100 mit Laststrängen 11 und Querstegen 12. An einem der Laststränge 11 ist eine Kraftmess-Sensoreinheit 30 gemäß der zweiten Ausführungsform, die in Figur 7 dargestellt ist, angesetzt, ohne den Strang auftrennen zu müssen. Der Laststrang 11 wird zwischen den Widerlagern 32 und dem Joch 33 eingelegt. Über die Stellschrauben 34 kann eine Vorspannung aufgebracht und dann verändert werden, um eine Kalibrierung durchzuführen.

Figur 10 zeigt die Anordnung mit einem zusätzlichen Abdeckelement 38, welches die Kraftmess-Sensoreinheit 30 überdeckt. Es kann sich auf den oberen Kanten der seitlichen Führungen am Widerlager 32 abstützen, lässt aber den dort geführten Laststrang 11 frei. Durch das Abdeckelement 38 wird verhindert, dass der Laststrang 11 und/oder das Joch 33 bei der späteren Überdeckung des Geogitters 100 eingeklemmt wird oder die Basis 31 mit zusätzlichen Kräften beaufschlagt wird, die nicht von Kräften im Laststrang 11 hervorgerufen werden.

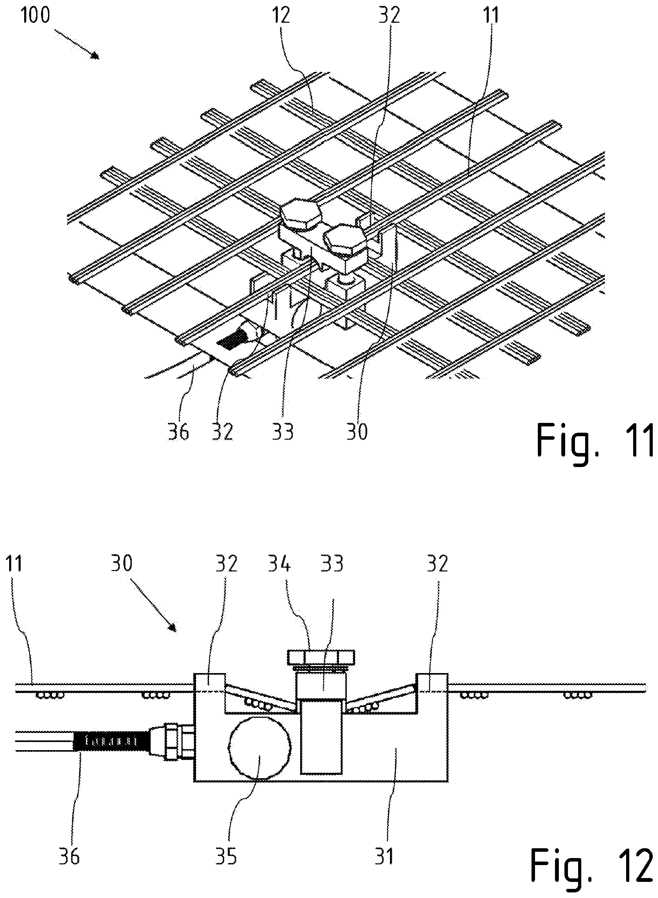

Figur 11 zeigt dieselbe Verbindung von Geogitter 100 und Kraftmess-Sensoreinheit 30 von der anderen Seite des Geogitters 100, also in Einbaulage gesehen von unten. In dieser Darstellung ist die dreifache Abstützung des Laststrangs 11 an den beiden Widerlagern 32 und dem Joch 33 sichtbar. Die Darstellung bezieht sich auf den Beginn des Montagevorgangs. Der Laststrang 11 liegt bereits auf den Widerlagern 32 auf. Das zum Einlegen des Laststrangs 11 abnehmbare Joch 33 ist bereits wieder aufgesetzt, aber noch nicht in die Arbeitsposition gebracht worden, so dass der Laststrang 11 auch noch nicht aus der Auflageebene der Widerlager 32 heraus ausgelenkt worden ist.

In Figur 12 ist die Kraftmess-Sensoreinheit 30 von der Seite her dargestellt. In diesem Stadium ist das Joch 33 über die in Figur 11 sichtbaren Stellschrauben 34 verstellt worden , so dass es auf dem Gehäuse 31 aufliegt. Gut sichtbar ist die deutliche Auslenkung des zwischen den Widerlagen 32 befindlichen Abschnitts des Laststrangs 11, der durch das Joch 33 nach unten gedrückt wird. Die dadurch im Gehäuse 31 induzierten Biegespannungen werden am Sensoreinsatz 35 erfasst und in elektrische Signale umgesetzt.

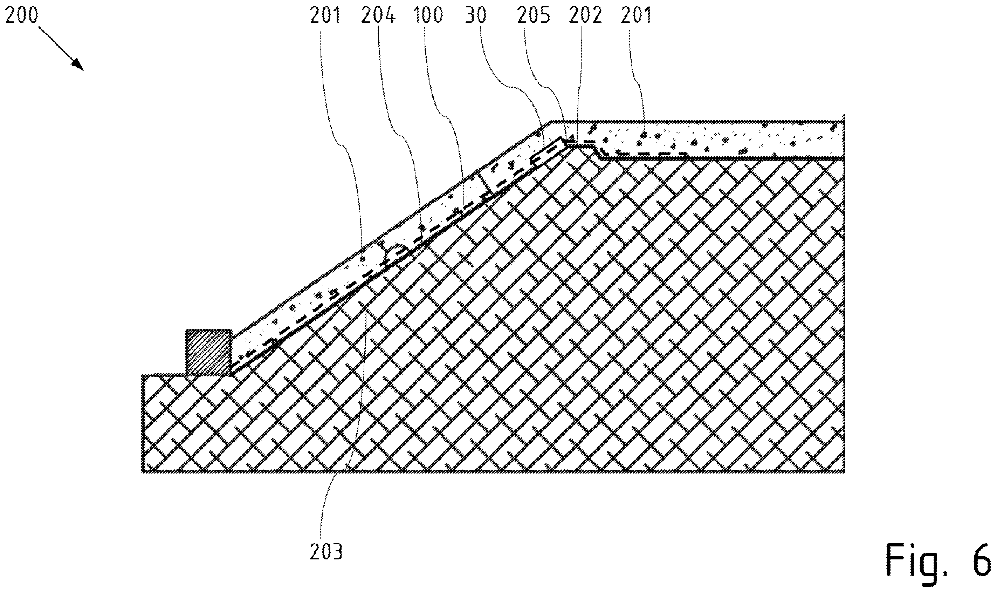

Wie mit der zuvor beschriebenen Kraftmess-Sensoreinheit 30 die zu erwartende Restlebensdauer eines Geogitters ermittelt werden kann, wird nachfolgend am Beispiel einer Bewehrung gegen hangparalleles Gleiten einer Deponieoberflächenabdichtung beschrieben. In Figur 6 ist der Querschnitt einer Böschung 200 an einem Deponiekörper 203 im Schnitt dargestellt.

Folgende Schritte sind zur Vorbereitung der späteren Bestimmung der Lebensdauer erforderlich:

- Festlegung eines repräsentativen Bemessungsquerschnittes anhand von Geländemodellen der geplanten Oberflächenabdichtung.
- Auswahl geeigneter Geokunststoffkomponenten des Abdichtungssystems aus funktionaler Sicht (Abdichtung).
- Um das Abdichtungselement eines dem Stand der Technik entsprechenden Mehrschichtaufbaus mit einem Schichtpaket 204, bestehend aus Dichtung, Schutzlage und Entwässerung sowie mit einer Vegetationsbodenschicht 201 planmäßig nicht mit Zugspannungen zu beanspruchen, ist es erforderlich, dass das Abdichtungselement an seiner Oberseite, im Idealfall auch an der Unterseite, eine geringere Reibung aufweist als darüber liegende Grenzschichten.

- Wenn die Neigung der Böschung 200 mit dem Abdichtungssystem größer sein soll als der Reibungswinkel in dieser kritischen Schichtgrenze, muss ein Geogitter 100 eingesetzt werden, welches das Defizit an haltenden Kräften in dem Schichtpaket 204 aufnimmt und in der Verankerung an einer Böschungskrone 202 aufnimmt.

Die Bemessung der Zugfestigkeit des Geogitters 100 und dessen Verankerung erfolgt getrennt für den Grenzzustand der Tragfähigkeit und für den Grenzzustand der Gebrauchstauglichkeit auf Grundlage von eingeführten Empfehlungen, Normen und Zulassungen z.B. EBGEO, BAM-Zulassung. Die in dem Zusammenhang durchgeführten analytischen, ggfs. auch numerischen Berechnungen ermöglichen eine relative genaue Bestimmung des Ortes der maximalen Zugkraft im Geogitter 100. In der Regel ist dies der Knickpunkt 205 an der Böschungskrone 202, an dem die Verankerung des Geogitters 100 beginnt und von dem an dem Verlauf nach unten folgend die an der Böschung 200 sukzessive eingetragenen Zugkräfte wieder abgebaut werden.

Auf Grundlage der Bemessung wird zunächst das Abdichtungssystem auf dem Deponiekörper 203 lagenweise fachgerecht aufgebaut und somit das Schichtpaket 204 erzeugt. Nach der Verlegung des Geogitters 100 darauf wird dieses bevorzugt direkt mit einer Kraftmess-Sensoreinheit ausgestattet, da der dafür erforderliche Aufwand geringer ist als bei nachträglichem Einbau.

Nach Einmessung der aus der analytischen Betrachtung als Ort maximaler Zugkraft identifizierten Stellen wie dem Knickpunkt 205 ist zunächst die Kraftmess-Sensoreinheit 30 für das Geogitter 100 zu kalibrieren. Das kann unter Laborbedingungen im Voraus für die Kraftmess-Sensoreinheit 30 durchgeführt werden, was bei einer größeren Anzahl von Messstellen vorteilhaft ist.

Um flexibler zu bleiben, können die Kraftmess-Sensoreinheiten 30 auch ohne Kalibrierung ausgeliefert werden und werden dann vor Ort an das jeweilige an der Messstelle eingebaute Geogitter angepasst. Dieses wird mit einem auf die Basislänge der Kraftmess-Sensoreinheit 30 angepassten Mechanismus für die Montage vorbereitet. Günstig ist hierfür beispielsweise ein Rahmen aus zwei Gewindestangen, an denen oben und unten zwei Traversen befestigt sind. Die Traversen wiederum sind jeweils derart ausgebaut, dass man einen oder mehrere Geogitterstränge mit Hilfe einer Klemmplatte gegen die Traverse befestigen kann. Zusätzlich ist der Rahmen mit einer oder zwei geeichten Kraftmessdosen ausgestattet. Nach Klemmung des Geogitters kann mit Hilfe eines Schraubenschlüssels schrittweise eine Verformung aufgebracht werden, welche in den Kraftmessdosen entsprechend registriert wird. Wenn die Kalibrierwerte in der Messwerterfassung für den entsprechenden Sensor hinterlegt wurden, kann der Montagerahmen mit dem Montagesensor abgebaut und ggfs. für die Montag einer weiteren Kraftmess-Sensoreinheit an anderer Stelle eingesetzt werden.

Nach Verkabelung und Anschluss an eine Messwerterfassungseinheit wie einen Datenlogger kann der Baubetrieb fortgeführt werden. Alle nun an dieser Stelle im Geogitter 100 auftretenden Zugkräfte werden erfasst und können je nach Ausführung der Messwerterfassungseinheit online oder an bestimmten Messterminen ausgelesen werden.

Auf Basis der im Labor bestimmten Kurzzeitzugfestigkeit kann nun jederzeit der reale Auslastungsgrad der Geokunststoffbewehrung bestimmt werden, welcher die Grundlage für daraus abgeleitete Berechnungen der verbleibenden Restlebensdauer der Bewehrung darstellt. Ob eine etwaige Veränderung der Zugkraft durch Kriech- oder Relaxationsprozesse oder durch eine Veränderung der Kräfteverteilung innerhalb des Abdichtungssystems entsteht, ist dabei unerheblich.

Bei einem nachträglichen Einbau der Kraftmess-Sensoreinheit 30 an der Böschung 200 ist die beschriebene Vorgehensweise analog auszuführen. Da die Geokunststoffbewehrung bereits unter Spannung steht und eine zusätzliche Belastung im Verlauf einer Kalibrierung im Feld möglicherweise einen unzulässig hohen Belastungsgrad bewirkt, ist hier eine vorherige Kalibrierung des Sensors auf das zu instrumentierende Geogitter im Labor zu bevorzugen.

## Patentansprüche

1. Verfahren zur Lastüberwachung und zur Bestimmung der Lebensdauer von geokunststoffbewehrten Erdkörpern mit wenigstens folgenden Schritten:

   - Einbauen eines Geogitters (100), das eine Vielzahl paralleler Laststränge (11, 13) aufweist, die über Querstege (12) miteinander verbunden sind, in ein Bauwerk (200),
   - Anbringen einer Sensoreinheit (20, 30) an wenigstens einer Messposition (1), die auf einem der Laststränge (11, 13) und/oder Querstege (12) und/oder an einem Kreuzungspunkt eines Laststrangs (11, 13) und eines Querstege (12) angeordnet ist, vor oder nach dem Überdecken des Geogitters (10) mit wenigstens einer Deckschicht (204);
   - Anschluss der Sensoreinheit (20, 30) an eine elektronische Auswertungs- und/oder Überwachungseinheit;
   - Vergleich der von der Sensoreinheit (20, 30) bereitgestellten Messdaten mit wenigstens einem Schwell- und/oder Referenzwert;
wobei als Sensoreinheit eine Kraftmess-Sensoreinheit (20, 30) verwendet wird, bei der mittels eines elektrischen Sensors die an der Messposition (1) auf den Laststrang (11, 13) und/oder den Quersteg (12) wirkende Kraft gemessen wird,
**dadurch**            **gekennzeichnet,**

- **dass** eine als Ansatzsensor ausgebildete Kraftmess-Sensoreinheit (30) verwendet wird, die zum Ansetzen an einen Laststrang (11, 13) oder an einen Quersteg (12) des Geogitters (100) ausgebildet ist, wobei der Laststrang (11, 13) oder Quersteg (12) auf zwei voneinander beabstandeten Widerlagern (32) aufliegt und von der anderen Seite mittels eines Jochs (33), das mit wenigstens einer Kraftmessdose gekoppelt ist, aus der Auflageebene der Widerlager (32) heraus ausgelenkt wird, und wobei die Kraftmess-Sensoreinheit (30) schwimmend am Laststrang (11, 13) oder Quersteg (12) gelagert ist;

- oder dass eine als Einsatzsensor ausgebildete Kraftmess-Sensoreinheit (20) verwendet wird und folgende weitere Schritte zur Anbringung der als Einsatzsensor ausgebildeten Kraftmess-Sensoreinheit (20) ausgeführt werden:

    ◦ Auftrennen wenigstens eines Laststrangs (13) an wenigstens einer Messposition (1) im Geogitter (100);
    ◦ Verbinden der Strangenden (13.1, 13.2) des unterbrochenen Laststrangs (13) mittels der Kraftmess-Sensoreinheit (20), die wenigstens zwei Terminalelemente (21, 22) für je ein Strangende (13.1, 13.2) und wenigstens ein zwischen den Terminalelementen (21, 22) angeordnetes Basiselement (23) mit wenigstens einem elektrischen Dehnungssensorelement (24) umfasst;
    ◦ Beseitigen einer Lose in dem Laststrang (13) oder Aufbringen einer Vorspannung beim Einsetzen der Kraftmess-Sensoreinheit (20) in den unterbrochenen Laststrang (13) oder danach;
    ◦ Anschluss der Sensoreinheit (20) an die elektronische Überwachungseinheit;
    ◦ Überdecken des Geogitters (10) mit wenigstens einer Deckschicht;
    ◦ Berechnung der Kraft im unterbrochenen Laststrang (13) des Geogitters (10) mittels der in der Kraftmess-Sensoreinheit (20) gemessenen Dehnung.

2. Verfahren nach Anspruch 1, **dadurch gekennzeichnet, dass** die Kraftmess-Sensoreinheit (20, 30) vor ihrem Einbau an dem später einzubauenden Geogitter (100) oder an einem typgleichen Geogitter zur Ermittlung einer Korrelation zwischen dem elektrischen Ausgangssignal und der am Messpunkt im Laststrang (11, 13) und/oder Quersteg (12) bestehenden Kraft kalibriert wird, indem das Geogitter (100) mit wenigstens einer Prüfkraft beaufschlagt wird und ein korrespondierender elektrischer Messwert an der Kraftmess-Sensoreinheit (20, 30) ermittelt wird.

3. Verfahren nach Anspruch 1 oder 2, **dadurch gekennzeichnet, dass** eine Böschung (200) überwacht wird, wobei auf den Böschungskörper ein flächiges Abdichtungssystem (204) und darauf aufliegend ein Geogitter (100) aufgebracht ist und wobei die Kraftmess-Sensoreinheit (20, 30) im Übergangsbereich zwischen einer Böschungskrone (205) und der Böschung (200) angeordnet ist.

**Claims**

1. Method for load monitoring and for determining the operational life of geosynthetic reinforced soils, having at least the following steps:

    - installing a geogrid (100), which has a plurality of parallel load lines (11, 13) connected to each other via cross bars (12), in a building (200),
    - attaching a sensor unit (20, 30) to at least one measurement position (1) arranged on one of the load lines (11, 13) and/or cross bars (12) and/or at a point of intersection between a load line (11, 13) and a cross bar (12), before or after covering the geogrid (10) with at least one covering layer (204);
    - connecting the sensor unit (20, 30) to an electronic evaluation and/or monitoring unit;
    - comparing the measurement data provided by the sensor unit (20, 30) with at least one threshold value and/or reference value;
    wherein the sensor unit used is a force measurement sensor unit (20, 30) in which the force acting on the load line (11, 13) and/or the cross bar (12) at the measurement position (1) is measured by means of an electrical sensor,
    **characterized**

    - **in that** a force measurement sensor unit (30) designed as an attachable sensor is used, which sensor is designed to be attached to a load line (11, 13) or to a cross bar (12) of the geogrid (100), wherein the load line (11, 13) or cross bar (12) rests on two abutments (32) spaced apart from each other and is deflected out of the support plane of the abutments (32) from the other side by means of a yoke (33) which is coupled to at least one load cell, and wherein the force measurement sensor unit (30) is mounted in a floating manner on the load line (11, 13) or cross bar (12);

- or in that a force measurement sensor unit (20) designed as an insertable sensor is used and, in order to attach the force measurement sensor unit (20) designed as an insertable sensor, the following further steps are carried out:

○ disconnecting at least one load line (13) at at least one measurement position (1) in the geogrid (100);
○ connecting the line ends (13.1, 13.2) of the interrupted load line (13) by means of the force measurement sensor unit (20) which comprises at least two terminal elements (21, 22) for each line end (13.1, 13.2), and at least one base element (23) which is arranged between the terminal elements (21, 22) and has at least one electrical strain sensor element (24);
○ eliminating looseness in the load line (13) or applying a preload when inserting the force measurement sensor unit (20) into the interrupted load line (13) or after;
○ connecting the sensor unit (20) to the electronic monitoring unit;
○ covering the geogrid (10) with at least one covering layer;
○ calculating the force in the interrupted load line (13) of the geogrid (10) by means of the strain measured in the force measurement sensor unit (20).

2. Method according to Claim 1, **characterized in that** the force measurement sensor unit (20, 30) is calibrated prior to being installed on the geogrid (100) that is to be subsequently installed, or on a geogrid of the same type, in order to ascertain a correlation between the electrical output signal and the force existing at the measurement point in the load line (11, 13) and/or cross bar (12), whereby at least one test force is applied to the geogrid (100) and a corresponding electrical measurement value at the force measurement sensor unit (20, 30) is ascertained.

3. Method according to Claim 1 or 2, **characterized in that** a slope (200) is monitored, wherein a planar sealing system (204) and a geogrid (100) lying thereon are applied to the slope body and wherein the force measurement sensor unit (20, 30) is arranged in the transition region between a slope top (205) and the slope (200).

**Revendications**

1. Procédé de surveillance de la charge et de détermination de la durée de vie de masses de terre renforcées par géosynthétique, comprenant au moins les étapes suivantes :

- installation, dans un ouvrage (200), d'une géogrille (100) qui possède une pluralité de cordes de charge (11, 13) parallèles reliées entre elles par des traverses (12),
- pose d'une unité de capteur (20, 30) à au moins une position de mesure (1) qui est disposée sur l'une des cordes de charge (11, 13) et/ou des traverses (12) et/ou à un point de croisement d'une corde de charge (11, 13) et d'une traverse (12), avant ou après le recouvrement de la géogrille (10) avec au moins une couche de recouvrement (204) ;
- raccordement de l'unité de capteur (20, 30) à une unité électronique d'évaluation et/ou de surveillance ;
- comparaison des données de mesure fournies par l'unité de capteur (20, 30) avec au moins une valeur de seuil et/ou de référence ;
l'unité de capteur utilisée étant une unité de capteur dynamométrique (20, 30), avec laquelle la force qui agit sur la corde de charge (11, 13) et/ou la traverse (12) à la position de mesure (1) est mesurée au moyen d'un capteur électrique, **caractérisé en ce**

- **qu'**une unité de capteur dynamométrique (30) réalisée sous la forme d'un capteur en applique est utilisée, qui est conçue pour être appliquée à une corde de charge (11, 13) ou à une traverse (12) de la géogrille (100), la corde de charge (11, 13) ou la traverse (12) reposant sur deux butées (32) espacées l'une de l'autre et étant déviée depuis l'autre côté hors du plan d'appui des butées (32) au moyen d'un étrier (33) qui est couplé à au moins une boîte dynamométrique, et l'unité de capteur dynamométrique (30) étant montée flottante sur la corde de charge (11, 13) ou la traverse (12) ;
- ou qu'une unité de capteur dynamométrique (20) réalisée sous la forme d'un capteur à insertion est utilisée et les étapes suivantes sont exécutées pour la pose de l'unité de capteur dynamométrique (20) réalisée sous la forme d'un capteur à insertion :

○ sectionnement d'au moins une corde de charge (13) à au moins une position de mesure (1) dans la géogrille (100) ;
○ raccordement des extrémités de corde (13.1, 13.2) de la corde de charge (13) interrompue au moyen de l'unité de capteur dynamométrique (20), qui comporte au moins deux éléments terminaux (21, 22) respectivement pour une extrémité (13.1, 13.2) et au moins un élément de base (23) disposé entre les éléments terminaux (21, 22) avec au moins un élément capteur d'allongement électrique (24) ;
○ élimination d'un relâchement dans la corde de charge (13) ou application d'une précharge lors de l'insertion de l'unité de capteur dynamométrique (20) dans la corde de charge (13) interrompue ou après ;
○ raccordement de l'unité de capteur (20) à l'unité de surveillance électronique ;
○ recouvrir la géogrille (10) avec au moins une couche de recouvrement ;
○ calcul de la force dans la corde de charge (13) interrompue de la géogrille (10) au moyen de l'allongement mesuré dans l'unité de capteur dynamométrique (20).

2. Procédé selon la revendication 1, **caractérisé en ce que** l'unité de capteur dynamométrique (20, 30) est étalonnée avant son installation sur la géogrille (100) à installer ultérieurement ou sur une géogrille de type identique afin de déterminer une corrélation entre le signal de sortie électrique et la force présente au point de mesure dans la corde de charge (11, 13) et/ou la traverse (12), en soumettant la géogrille (100) à au moins une force d'essai et en déterminant une valeur de mesure électrique correspondante au niveau l'unité de capteur dynamométrique (20, 30).

3. Procédé selon la revendication 1 ou 2, **caractérisé en ce qu'**un talus (200) est surveillé, un système d'étanchéité plat (204) étant appliqué sur le corps du talus et une géogrille (100) reposant sur celui-ci, et l'unité de capteur dynamométrique (20, 30) étant disposée dans la zone de transition entre un sommet du talus (205) et le talus (200).

Fig. 1

11

13

12

1

10

Fig. 2

EP 3 803 305 B1

EP 3 803 305 B1

Fig. 3

Fig. 4

Fig. 5

EP 3 803 305 B1

200

201  204  100  30  205  202  201

203

Fig. 6

19

Fig. 7

Fig. 8

100    11    12    30

32    32

Fig. 9

100    38

11

30

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 203320507 U
- WO 2010085243 A1
- KR 101244304 B1

- US 4429580 A
- US 2016341614 A1
- DE 202004020950 U1

**In der Beschreibung aufgeführte Nicht-Patentliteratur**

- **H. ZANZINGER** ; **GARTUNG, E.** *7th International Conference on Geosynthetics*, 01 September 2022, https:/www.researchgate.net/profile/Helmut Zanzinger/publication/305723319 Performance of a geogrid reinforced railway embankment on piles/-links/579c784f08ae5d5e1e14b819/Performance-of-a-geogrid-reinforced-railway-embankment-on-piles.pdf